# Europäisches Patentamt
# European Patent Office
# Office européen des brevets

(19)

(11) Veröffentlichungsnummer: **0 053 694**
**B1**

(12) ## EUROPÄISCHE PATENTSCHRIFT

(45) Veröffentlichungstag der Patentschrift:
14.03.84

(51) Int. Cl.³: **C 01 B 25/238, C 01 B 25/26**

(21) Anmeldenummer: **81108770.9**

(22) Anmeldetag: **23.10.81**

(54) **Verfahren zur Reduktion von Eisen in phosphorsaurer Lösung.**

(30) Priorität: **04.12.80 DE 3045645**

(43) Veröffentlichungstag der Anmeldung:
**16.06.82 Patentblatt 82/24**

(45) Bekanntmachung des Hinweises auf die Patenterteilung:
**14.03.84 Patentblatt 84/11**

(84) Benannte Vertragsstaaten:
**AT BE CH DE FR GB IT LI NL**

(56) Entgegenhaltungen:
**DE - B - 2 528 895**
**DE - C - 1 065 388**
**DE - C - 1 567 619**
**GB - A - 1 267 853**
**US - A - 3 421 845**

**"Gmelins Handbuch der anorganischen Chemie" 8.**
**Auflage, Phosphor, Teil B 1964, VERLAG CHEMIE,**
**Weinheim/Bergstrasse Seite 328 "Eisensalze"**

(73) Patentinhaber: **HOECHST AKTIENGESELLSCHAFT,**
**Postfach 80 03 20, D-6230 Frankfurt am Main 80 (DE)**

(72) Erfinder: **Schrödter, Klaus, Dr., Röntgenstrasse 23,**
**D-5000 Köln 30 (DE)**
Erfinder: **Lehr, Klaus, Dr., Am grünen Weg 10,**
**D-5030 Hürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Verfahren zur Reduktion von Eisen in phosphorsaurer Lösung

Die vorliegende Erfindung betrifft ein Verfahren zur Reduktion von Eisen in phosphorsauren Lösungen, insbesondere in Naßverfahrensphosphorsäure von der dreiwertigen in die zweiwertige Oxidationsstufe mit Hilfe eines Reduktionsmittels.

Aus verschiedenen Gründen ist häufig bei der Verarbeitung und Reinigung von Phosphorsäure ein hoher Eisen(II)-Gehalt in der Säure erforderlich. So ist beispielsweise eine quantitative Fällung von Vanadin bei der Neutralisationsreinigung von Naßphosphorsäure nur bei gleichzeitiger Ausfällung großer Mengen an Eisen(II)-phosphat möglich. Ferner muß bei der Gewinnung von Uran aus Naßverfahrensphosphorsäure durch Flüssig-Flüssig-Extraktion bei verschiedenen Verfahren Uran(VI) durch Eisen(II)-Ionen zu Uran(IV) reduziert werden.

Zur Reduktion der in technischer Naßphosphorsäure normalerweise in relativ hoher Konzentration vorhandenen Eisen(III)-Ionen sind bereits verschiedene Verfahren vorgeschlagen worden.

So wird gemäß DE-C-1 065 388 als Reduktionsmittel metallisches Eisen oder Zink verwendet. Nachteil dieser Verfahrensweise ist, daß durch das zugesetzte Metall beträchtliche Mengen $P_2O_5$ gebunden werden, was zu einer erheblichen Verminderung der $P_2O_5$-Ausbeute führt. Der bei der Reaktion entwickelte Wasserstoff macht überdies zusätzlich Sicherheitsvorkehrungen erforderlich.

Weiterhin werden gemäß AT-B-151 948 und DE-C-1 567 619 Schwefelwasserstoff sowie Dithionite zur Reduktion von Fe(III)-Ionen verwendet. Der Einsatz von $H_2S$ erfordert aufwendige Apparate wie Begasungskolonnen und Druckbehälter. Sowohl der außerordentlich toxische Schwefelwasserstoff als auch das bei Verwendung von Dithioniten freiwerdende $SO_2$ zwingen zu besonderen Sicherheitsmaßnahmen. Dithionite sind darüber hinaus sehr hygroskopische und leicht zersetzliche Salze, was ihre technische Anwendbarkeit stark einschränkt.

Aufgabe der vorliegenden Erfindung ist es, die Nachteile der bekannten Reduktionsverfahren zu vermeiden und in einfacher Weise Eisen in phosphorsauren Lösungen und insbesondere in Naßphosphorsäure von der Oxidationsstufe III in die Stufe II zu überführen.

Überraschenderweise wurde gefunden, daß sich diese Aufgabe lösen läßt, wenn man als Reduktionsmittel roten Phosphor einsetzt und die Reduktion in Gegenwart von Kupfer durchführt, wobei das Kupfer in der phosphorsauren Lösung gelöst vorliegt bzw. vor der Reduktionsreaktion zugesetzt wird.

Obwohl größere Mengen nicht stören, ist für die Durchführung des erfindungsgemäßen Verfahrens ausreichend, wenn die Kupfermengen 5 bis 100 ppm (Gewichtsteile pro Million), bezogen auf die Lösung, betragen, da sich das Kupfer wie ein Katalysator verhält.

Es empfiehlt sich, die Reduktion bei Temperaturen von 10 bis 90°C, vorzugsweise bei 60 bis 80°C, durchzuführen. Die eisenhaltige phosphorsaure Lösung läßt man mit dem roten Phosphor zweckmäßigerweise 1 bis 30 Minuten in Kontakt, wobei die Kontaktzeit mit zunehmender Temperatur und/oder abnehmender Phosphorsäurekonzentration in der Lösung kürzer und umgekehrt mit abnehmender Temperatur und/oder zunehmender Phosphorsäurekonzentration länger wählt. Als Ausgangsprodukt eignet sich insbesondere eine eisen- und gegebenenfalls kupferhaltige Naßverfahrensphosphorsäure, die Eisen und Kupfer bereits als Verunreinigungen enthält. Zweckmäßigerweise leitet man die zu reduzierende Lösung durch ein Festbett aus gemahlenem rotem Phosphor hindurch, der vorzugsweise eine Korngröße von 0,3 bis 2 mm aufweist.

Auf diese Weise läßt sich das erfindungsgemäße Verfahren auch sehr leicht kontinuierlich gestalten, indem man die Menge des roten Phosphors entsprechend dem bei der Reduktion eintretenden Verbrauch laufend ergänzt und die Durchflußgeschwindigkeit der Lösung durch das Bett aus rotem Phosphor so einstellt, daß die für die Reduktion des Eisens erforderliche Kontaktzeit zwischen Lösung und Phosphor mindestens erreicht wird.

Obwohl aus »Gmelins Handbuch der anorganischen Chemie«, Band Phosphor, Teil B, 8. Auflage, Seite 328 bekannt ist, das Fe(III) in salzsaurer Lösung durch Kochen mit rotem Phosphor zu Fe(II) reduziert wird, war die erfindungsgemäße Arbeitsweise für einen Fachmann nicht naheliegend.

Während nämlich Eisen von rotem Phosphor in anderen Mineralsäuren leicht reduziert wird, ist dies in phosphorsaurer Lösung unter üblichen Bedingungen nicht der Fall.

Versetzt man nämlich reine thermische Phosphorsäure mit Fe(III)-Ionen und rotem Phosphor, so tritt nur in geringem Umfang eine Reduktion des Eisens ein. Erst durch die Gegenwart von geringen Mengen Kupferionen wird die Reduktion katalytisch beschleunigt. Der Phosphor oxidiert sich dabei zum Phosphat- bzw. Phosphatanion, so daß pro Mol P zwischen drei und fünf Mol Eisen(II)-Ionen gebildet werden.

Zu den Vorteilen des erfindungsgemäßen Verfahrens gehören:

a) die hohe Reduktionsleistung (pro Mol P werden im Mittel vier Mol Fe(III) reduziert);
b) die hohe Reaktivität (dadurch sind kurze Kontaktzeiten, relativ kleine Apparate und niedrige Temperaturen möglich);
c) die Reinheit des Reduktionsmittels (es werden keine Verunreinigungen der Säure zugeführt. An Oxidationsprodukten entstehen Phosphat- und Phosphitanionen. Letztere stören nicht bzw. können bei der Weiterverarbeitung der Säure zur Phosphorsäure oxidiert werden).

0 053 694

In den folgenden Beispielen soll das erfindungsgemäße Verfahren näher erläutert werden.

Filtrierte kupferhaltige Naßverfahrensphosphorsäure aus marokkanischem Rohphosphat unterschiedlicher $P_2O_5$- und Fe(III)-Konzentration sowie mit Fe(III)-Sulfat dotierte thermische Phosphorsäure wurden kontinuierlich durch eine mit rotem Phosphor (Korngröße 0,3—0,5 mm) gefüllte beheizbare Kolonne (Ø 30 mm, P-Bettvolumen 200 ml) gepumpt. Die in Abhängigkeit von Durchsatz und Temperatur erzielten Reduktionsraten sind in der nachfolgenden Tabelle zusammengestellt.

In Beispiel 5 wurde in der behandelten Säure zusätzlich auch der Gehalt an Uran(IV) ermittelt. Dieser betrug bei einem Gesamtgehalt von 185 ppm Uran in der behandelten Säure 170 ppm gegenüber 60 ppm U(IV) vor der Reduktion mit rotem Phosphor.

Tabelle

| Beispiel | Eingesetzte Säure | | | Kontakt-zeit min | Tempe-ratur °C | Behandelte Säure % Fe(II) | Reduktions-grad % |
|---|---|---|---|---|---|---|---|
| | % $P_2O_5$ | % Fe(III) | ppm Cu | | | | |
| Naßverfahrens-phosphorsäure | | | | | | | |
| 1 | 28 | 0,16 | 25 | 12 | 20 | 0,12 | 75 |
| 2 | 28 | 0,16 | 25 | 12 | 50 | 0,16 | 100 |
| 3 | 28 | 0,16 | 25 | 2 | 80 | 0,16 | 100 |
| 4 | 51 | 0,28 | 60 | 15 | 80 | 0,22 | 79 |
| 5 | 51 | 0,28 | 60 | 30 | 80 | 0,28 | 100 |
| Therm. $H_3PO_4$ | | | | | | | |
| 6 | 28 | 0,30 | — | 20 | 80 | 0,02 | 7 |
| 7 | 28 | 0,30 | — | 80 | 80 | 0,06 | 20 |

### Patentansprüche

1. Verfahren zur Reduktion von Eisen in phosphorsaurer Lösung von der drei- in die zweiwertige Oxidationsstufe mit Hilfe eines Reduktionsmittels, dadurch gekennzeichnet, daß man als Reduktionsmittel roten Phosphor einsetzt und die Reduktion in Gegenwart von Kupfer durchführt.

2. Verfahren nach Anspruch 1, dadurch gekennzeichnet, daß Kupfer in der phosphorsauren Lösung gelöst vorliegt.

3. Verfahren nach Anspruch 2, dadurch gekennzeichnet, daß Kupfer in Mengen von 5 bis 100 ppm (Gewichtsteile pro Million), bezogen auf die Lösung, vorliegt.

4. Verfahren nach einem der Ansprüche 1 bis 3, dadurch gekennzeichnet, daß man die Reduktion bei Temperaturen von 10 bis 90° C durchführt.

5. Verfahren nach Anspruch 4, dadurch gekennzeichnet, daß man die Reduktion bei Temperaturen von 60 bis 80° C durchführt.

6. Verfahren nach einem der Ansprüche 1 bis 5, dadurch gekennzeichnet, daß man die eisenhaltige phosphorsaure Lösung mit dem roten Phosphor 1 bis 30 Minuten in Kontakt läßt, wobei man die Kontaktzeit mit zunehmender Temperatur und/oder abnehmender Phosphorsäurekonzentration in der Lösung kürzer und umgekehrt mit abnehmender Temperatur und/oder zunehmender Phosphorsäurekonzentration länger wählt.

7. Verfahren nach einem der Ansprüche 1 bis 6, dadurch gekennzeichnet, daß man als Ausgangsprodukt eine eisen- und gegebenenfalls kupferhaltige Naßverfahrensphosphorsäure einsetzt.

8. Verfahren nach einem der Ansprüche 1 bis 7, dadurch gekennzeichnet, daß man die phosphorsaure Lösung durch ein Festbett aus gemahlenem rotem Phosphor leitet.

9. Verfahren nach Anspruch 8, dadurch gekennzeichnet, daß man gemahlenen Phosphor mit einer Korngröße von 0,3 bis 2 mm einsetzt.

10. Verfahren nach einem der Ansprüche 1 bis 8, dadurch gekennzeichnet, daß man zur kontinuierlichen Durchführung des Verfahrens die Menge des roten Phosphors entsprechend dem bei der Reduktion eintretenden Verbrauch laufend ergänzt und die Durchflußgeschwindigkeit der Lösung durch das Bett aus rotem Phosphor so einstellt, daß die für die Reduktion des Eisens erforderliche Kontaktzeit zwischen Lösung und Phosphor mindestens erreicht wird.

### Claims

1. Process for reducing iron in phosphoric acid solution from the trivalent to bivalent oxidation stage with the aid of a reductant, which comprises using red phosphorus as the reductant and effecting the reduction in the presence of copper.

2. Process as claimed in claim 1, wherein the copper is dissolved in the phosphoric acid solution.

3. Process as claimed in claim 2, wherein the copper is present in proportions of 5 up to 100 ppm

3

**0 053 694**

(weight parts per million), based on the solution.

4. Process as claimed in any of claims 1 to 3, wherein the reduction is effected at temperatures of 10 to 90°C.

5. Process as claimed in claim 4, wherein the reduction is effected at temperatures of 60 to 80°C.

6. Process as claimed in any of claims 1 to 5, wherein the phosphoric acid solution containing iron is contacted with the red phosphorus over a period of 1 to 30 minutes, shorter contact periods being selected for an increasing temperature and/or decreasing phosphoric acid concentration, and inversely longer contact periods being selected for a decreasing temperature and/or increasing phosphoric acid concentration.

7. Process as claimed in any of claims 1 to 6, wherein wetprocessed phosphoric acid containing iron and optionally also copper is used as feed material.

8. Process as claimed in any of claims 1 to 7, wherein the phosphoric acid solution is passed through a fixed bed of ground red phosphorus.

9. Process as claimed in claim 8, wherein the ground phosphorus has a particle size of 0.3 to 2 mm.

10. Process as claimed in any of claims 1 to 8, wherein, in order to effect the process continuously, the quantity of red phosphorus consumed during the reduction is continuously replaced and the flow velocity of the solution through the bed of red phosphorus is selected so that the contact period between solution and phosphorus necessary for the reduction of iron is at least obtained.

## Revendications

1. Procédé de réduction du fer en solution d'acide phosphorique du stade d'oxydation trivalent au stade divalent à l'aide d'un réducteur, caractérisé en ce que l'on utilise comme réducteur du phosphore rouge et on effectue la réduction en présence de cuivre.

2. Procédé selon la revendication 1, caractérisé en ce que le cuivre est présent dans la solution d'acide phosphorique à l'état dissous.

3. Procédé selon la revendication 2, caractérisé en ce que le cuivre est présent en quantités de 5—100 ppm (parties en poids par million), par rapport à la solution.

4. Procédé selon l'une des revendications 1 à 3, caractérisé en ce que l'on effectue la réduction à des températures de 10—90°C.

5. Procédé selon la revendication 4, caractérisé en ce que l'on effectue la réduction à des températures de 60—80°C.

6. Procédé selon l'une des revendications 1 à 5, caractérisé en ce que l'on met la solution d'acide phosphorique contenant du fer en contact avec le phosphore rouge pendant 1—30 min, la durée de contact étant choisie plus courte pour une température croissante et/ou une concentration d'acide phosphorique décroissante et, inversement, plus longue pour une température décroissante et/ou une concentration d'acide phosphorique croissante.

7. Procédé selon l'une des revendications 1 à 6, caractérisé en ce que l'on utilise comme produit de départ un acide phosphorique contenant du fer et éventuellement du cuivre, préparé par voie humide.

8. Procédé selon l'une des revendications 1 à 7, caractérisé en ce que l'on fait passer la solution d'acide phosphorique à travers un lit fixe de phosphore rouge broyé.

9. Procédé selon la revendication 8, caractérisé en ce que l'on utilise du phosphore broyé présentant une granulométrie de 0,3—2 mm.

10. Procédé selon l'une des revendications 1 à 8, caractérisé en ce que, pour mettre en oeuvre le procédé en continu, on remplace en continu la quantité de phosphore rouge consommée pendant la réduction et on choisit la vitesse de passage de la solution à travers le lit de phosphore rouge, de manière à atteindre au moins la durée de contact entre la solution et le phosphore nécessaire pour la réduction du fer.